# EUROPÄISCHE PATENTSCHRIFT

(11) **EP 2 837 845 B1**
(45) Veröffentlichungstag und Bekanntmachung des Hinweises auf die Patenterteilung: **05.04.2017**
(21) Anmeldenummer: 14169783.9
(22) Anmeldetag: 26.05.2014
(51) Int. Cl.: F16D 13/72, F16D 25/12

(54) **Reiblamellensystem und Reibkupplung mit einem solchen Reiblamellensystem**
Friction disc system and friction coupling with such a friction disc system
Système de lamelles à friction et embrayage à friction équipé d'un tel système de lamelles à friction

(30) Priorität: 19.06.2013 DE 102013211460
(43) Veröffentlichungstag der Anmeldung: 18.02.2015
(73) Patentinhaber: Schaeffler Technologies AG & Co. KG, 91074 Herzogenaurach (DE)
(72) Erfinder: Kühnle, Michael, 77815 Bühl (DE)

(56) Entgegenhaltungen:
- DE-A1-102010 054 253
- DE-A1-102011 112 437

## Beschreibung

Die Erfindung betrifft ein Reiblamellensystem sowie eine Reibkupplung mit solch einem Reiblamellensystem, wobei das Reiblamellensystem eine erste Reiblamelle und eine zweite Reiblamelle umfasst, wobei die erste Reiblamelle mit einer Eingangsseite einer Reibkupplung und die zweite Reiblamelle mit einer Ausgangsseite der Reibkupplung koppelbar ist, wobei jede Reiblamelle jeweils eine Trägerscheibe und einen stirnseitig an der Trägerscheibe angeordneten Reibbelag aufweist, wobei die beiden Reiblamellen derart axial angrenzend zueinander angeordnet sind, dass dem Reibbelag der zweiten Reiblamelle axial gegenüberliegend die Trägerscheibe der ersten Reiblamelle angeordnet ist, wobei die Trägerscheibe und der Reibbelag ausgebildet sind, aneinandergepresst zu werden, um einen Reibschluss zwischen dem Reibbelag der ersten Reiblamelle und der Trägerscheibe der zweiten Reiblamelle bereitzustellen und die Eingangsseite mit der Ausgangsseite drehmomentschlüssig zu verbinden, wobei in dem Reibbelag der ersten und der zweiten Reiblamelle jeweils wenigstens eine Radialnut vorgesehen ist, die zumindest teilweise radial von innen nach außen geführt und ausgebildet ist, eine Kühlflüssigkeit der Reibkupplung zur Kühlung der Reiblamellen zu führen.

Aus der WO 02/070913 A1 ist eine Kupplungsanordnung bekannt. Diese umfasst eine mit Fluid gefüllte Gehäuseanordnung, wenigstens ein mit der Kupplungsanordnung gemeinsam drehbares Reiborgan, wenigstens ein mit einem Antriebsorgan gemeinsam drehbares zweites Reiborgan, welches zur Herstellung einer Reibwechselwirkung in Anlage an wenigstens einem ersten Reiborgan bringbar ist, wobei wenigstens ein Reiborgan zur Erzeugung einer die Reiborgane wenigstens bereichsweise umströmende Fluidzirkulation ausgebildet ist. Dazu wird die Kühlflüssigkeit radial von außen nach innen über Radialnute geführt und dann durch eine axiale Durchgangsöffnung auf die andere Seite des Reiborgans gelenkt, von wo es wieder radial nach außen geführt wird. Radial außenseitig strömt das Kühlfluid wieder zurück auf die andere Seite des Reiborgans, wobei es hierbei durch eine Verzahnung treten muss, die eine drehmomentschlüssige Verbindung zum Abstützen des Reiborgans bereitstellt. Dadurch wird die Zirkulation der Kühlflüssigkeit gehemmt.

Aus der DE 10 2011 112 437 A1 ist ein Reiblamellensystem mit abwechselnd angeordneten jeweils einen Reibbelag tragenden Reiblamellen und reibbelagfreien Lamellen bekannt. Dabei ist die reibbelagfreie Lamelle hohlförmig ausgebildet.

Aus der DE 10 2010 054 253 A1 ist eine Kupplungsanordnung bekannt, bei der ein Reibbelagträger einen ringförmigen Reibbelag mit Kühlnuten aufweist.

Es ist Aufgabe der Erfindung, ein verbessertes Reiblamellensystem und eine verbesserte Reibkupplung bereitzustellen.

Diese Aufgabe wird mittels eines Reiblamellensystems gemäß Patentanspruch 1 gelöst. Ferner wird die Aufgabe auch durch eine Reibkupplung gemäß Patentanspruch 10 gelöst. Vorteilhafte Ausführungsformen sind in den abhängigen Ansprüchen angegeben. Erfindungsgemäß wurde erkannt, dass ein verbessertes Reiblamellensystem dadurch bereitgestellt werden kann, dass das Reiblamellensystem eine erste Reiblamelle und eine zweite Reiblamelle aufweist, wobei die erste Reiblamelle mit einer Eingangsseite einer Reibkupplung und die zweite Reiblamelle mit einer Ausgangsseite der Reibkupplung koppelbar ist. Jede Reiblamelle umfasst jeweils eine Trägerscheibe und einen stirnseitig an der Trägerscheibe angeordneten Reibbelag. Die Reiblamellen sind derart axial angrenzend zueinander angeordnet, dass axial gegenüberliegend zu dem Reibbelag der zweiten Reiblamelle die Trägerscheibe der ersten Reiblamelle angeordnet ist. Die Trägerscheibe und der Reibbelag sind ausgebildet, aneinander gepresst zu werden, um einen Reibschluss zwischen dem Reibbelag der ersten Reiblamelle und der Trägerscheibe der zweiten Reiblamelle bereitzustellen und die Eingangsseite drehmomentschlüssig mit der Ausgangsseite zu verbinden. In dem Reibbelag der ersten und der zweiten Reiblamelle ist jeweils wenigstens eine Radialnut vorgesehen, die zumindest teilweise radial von innen nach außen geführt und ausgebildet ist, eine Kühlflüssigkeit der Reibkupplung zur Kühlung der Reiblamellen zu führen. Ferner ist wenigstens eine zumindest teilweise in radialer Richtung von außen nach innen durchlaufende Durchgangsöffnung in der Trägerscheibe der ersten und/oder der zweiten Reiblamelle vorgesehen. Die Durchgangsöffnung verbindet die Radialnut der ersten Reiblamelle mit der Radialnut der zweiten Reiblamelle, so dass die Kühlflüssigkeit von der Radialnut der zweiten Reiblamelle in die Radialnut der ersten Reiblamelle strömen kann.

Auf diese Weise wird gewährleistet, dass ein höherer Massenstrom von Kühlflüssigkeit durch das Reiblamellensystem strömen kann und somit ein größerer Wärmebetrag aus dem Reiblamellensystem abgeführt werden kann. Dies hat zur Folge, dass bei sonst gleichen Ausgestaltungen einer Reibkupplung mit dem Reiblamellensystem über die Reibkupplung ein höheres Anfahrmoment übertragen werden kann. Ferner wird der Verschleiß der Reibbeläge durch eine geringere Temperatur der Reibbeläge im Anfahrzeitpunkt reduziert.

Erfindungsgemäß sind an dem Reibbelag der zweiten Reiblamelle eine weitere Radialnut und eine Verbindungsnut vorgesehen, wobei die weitere Radialnut zumindest teilweise radial von innen nach außen verlaufend und umfangsseitig beabstandet zur Radialnut angeordnet ist. Die Verbindungsnut ist zumindest teilweise in Umfangsrichtung umlaufend ausgebildet und verbindet die Radialnut fluidisch mit der weiteren Radialnut. Auf diese Weise kann ein Austausch von Kühlflüssigkeit zwischen der Radialnut und der weiteren Radialnut erfolgen.

In einer weiteren Ausführungsform ist ein in Umfangsrichtung zumindest teilweise umlaufender Begrenzungssteg an dem Reibbelag der zweiten Reiblamelle vorgesehen, wobei die Verbindungsnut radial außenseitig zu der Radialnut und/oder der weiteren Radialnut angeordnet ist, wobei der Begrenzungssteg die Verbindungsnut und/oder wenigstens eine der beiden Radialnuten radial außenseitig begrenzt. Auf diese Weise kann bei einem Anpressen der beiden Reiblamellen aneinander ein Austritt von Kühlflüssigkeit radial außenseitig an der zweiten Reiblamelle vermieden werden und ein Zwangseintritt von Kühlflüssigkeit in die Durchgangsöffnung bereitgestellt werden. Dadurch kann der Kühlflüssigkeitsstrom weiter erhöht werden.

In einer weiteren Ausführungsform weist die Radialnut der ersten Reiblamelle einen ersten Radialnutbereich und einen radial innen liegenden zum ersten Radialnutbereich angeordneten zweiten Radialnutbereich auf, wobei die beiden Radialnutbereiche eine unterschiedliche Breite in Umfangsrichtung aufweisen. Auf diese Weise kann ein definierter Kühlflüssigkeitsstrom durch die Radialnut festgelegt werden.

Besonders vorteilhaft ist hierbei, wenn der zweite Radialnutbereich in Umfangsrichtung schmaler ausgebildet ist als der erste Radialnutbereich.

In einer weiteren Ausführungsform weist die Radialnut der ersten und/oder der zweiten Reiblamelle radial innenseitig eine Eintrittsöffnung auf. Auf diese Weise wird ein Eintritt von Kühlflüssigkeit, die sich radial innenseitig des Reiblamellensystems befindet, auch bei anliegenden Reiblamellen in den Reibbelag der ersten Reiblamelle gewährleistet, so dass eine zuverlässige Kühlung der Reibbeläge gewährleistet ist.

In einer weiteren Ausführungsform umfasst die Trägerscheibe der ersten und/oder zweiten Reiblamelle ein erstes Trägerscheibenteil und ein zweites Trägerscheibenteil, wobei der erste Trägerscheibenteil und der zweite Trägerscheibenteil stirnseitig direkt aneinanderliegend angeordnet sind. Auf diese Weise kann die Durchgangsöffnung besonders einfach in das Trägerscheibenteil als eine im Trägerscheibenteil offene Nut eingebracht werden, die durch den zweiten Trägerscheibenteil verschlossen wird. Dadurch werden die Fertigungskosten für die Herstellung der Reiblamellen besonders niedrig gehalten.

In einer weiteren Ausführungsform ist in dem ersten Trägerscheibenteil ein erster zumindest teilweise in axialer Richtung verlaufender Durchgangsöffnungsabschnitt der Durchgangsöffnung und im zweiten Trägerscheibenteil ein zweiter zumindest teilweise in axialer Richtung verlaufender Durchgangsöffnungsabschnitt der Durchgangsöffnung angeordnet. Zwischen dem ersten und zweiten Durchgangsöffnungsabschnitt ist ein radial verlaufender Durchgangsöffnungsabschnitt der Durchgangsöffnung angeordnet. Auf diese Weise kann die Durchgangsöffnung besonders kostengünstig und einfach, beispielsweise mittels Spanverfahren, hergestellt werden.

In einer weiteren Ausführungsform ist zumindest ein Teilabschnitt der Durchgangsöffnung schräg zu einer Tangentiale der Trägerscheibe angeordnet ist, wobei vorzugsweise die Durchgangsöffnung radial innenseitig in der Radialnut der ersten Reiblamelle an einer ersten Durchgangsmündung und radial außenseitig in der Radialnut der zweiten Reiblamelle an einer zweiten Durchgangsmündung mündet und die zweite Durchgangsmündung in Drehrichtung der zweiten Reiblamelle vor der ersten Durchgangsmündung angeordnet ist. Auf diese Weise kann die Pumpwirkung des Reiblamellensystems auf die Kühlflüssigkeit weiter erhöht werden.

Nachfolgend wird die Erfindung anhand von Figuren näher erläutert. Dabei zeigen:
Figur 1 eine schematische Längsschnittansicht einer Reibkupplung mit einem Reiblamellensystem;
Figur 2 einen Längsschnitt durch das in Figur 1 gezeigte Reiblamellensystem;
Figur 3 eine Draufsicht auf eine erste Reiblamelle des in Figuren 1 und 2 gezeigten Reiblamellensystems;
Figur 4 eine Draufsicht auf eine zweite Reiblamelle des in den Figuren 1 und 2 gezeigten Reiblamellensystems;
Figur 5 einen Querschnitt durch die in Figur 3 gezeigte erste Reiblamelle;
Fig. 6 und 7 perspektivische Teilansichten der in Figur 3 gezeigten ersten Reiblamelle; und
Figur 8 einen Querschnitt durch die in Figur 3 gezeigte erste Reiblamelle entlang einer Schnittebene A-A.

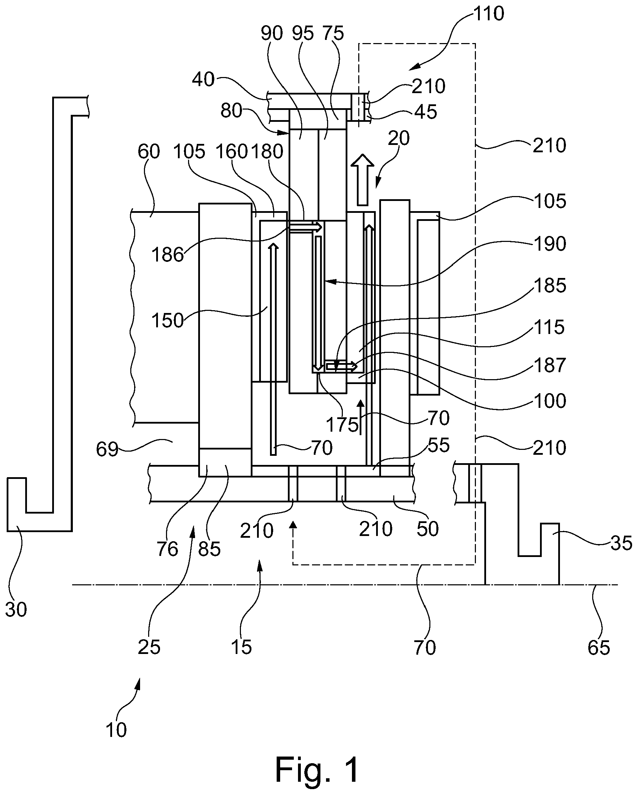

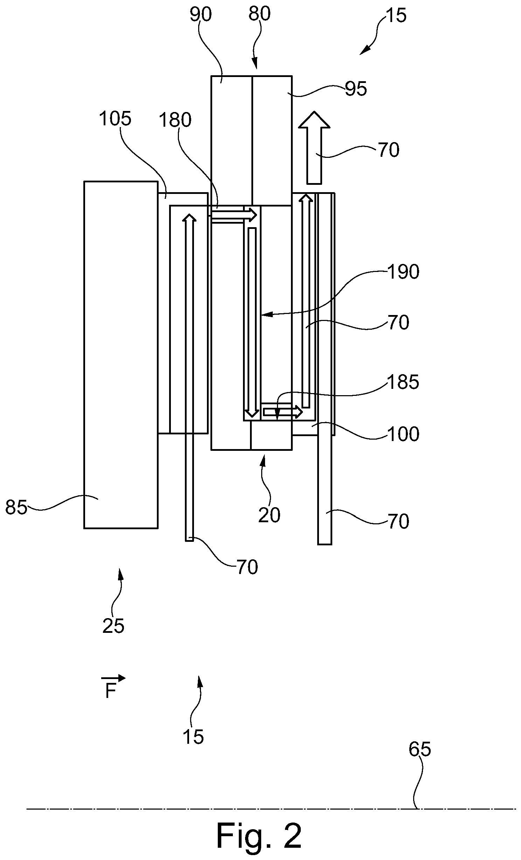

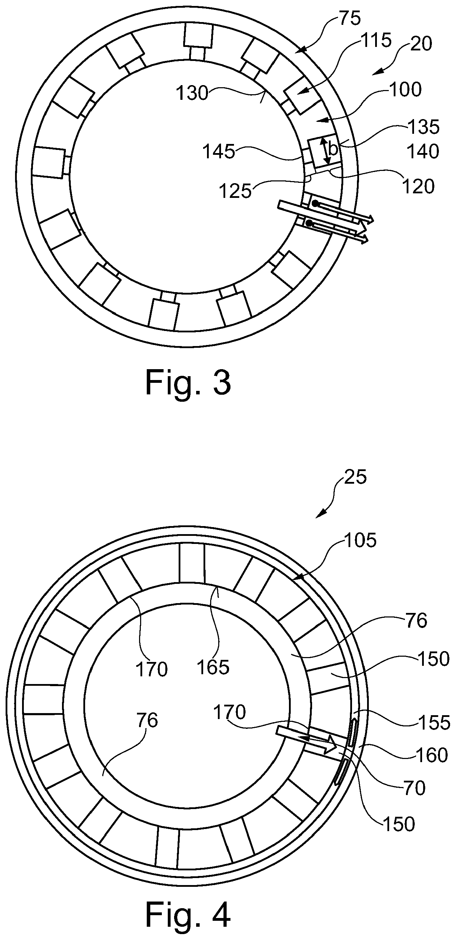

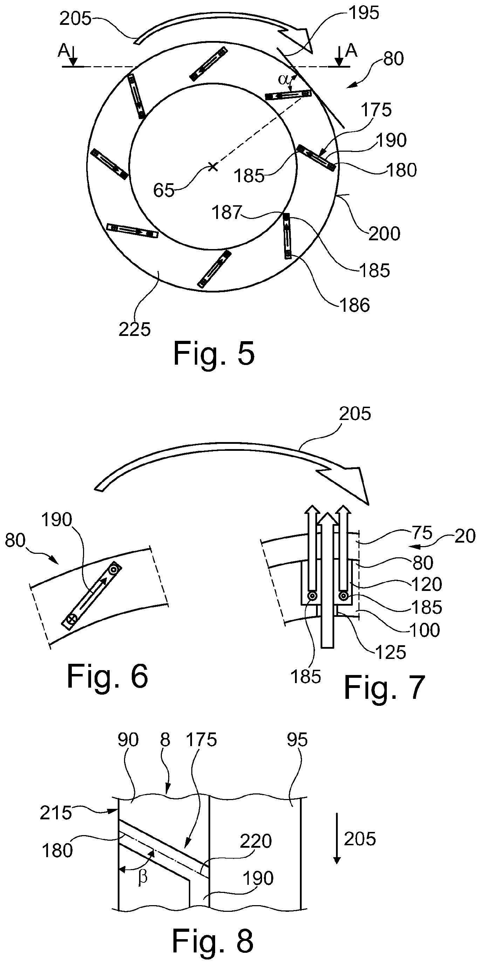

Figur 1 zeigt einen Längsschnitt durch eine Reibkupplung 10 mit einem Reiblamellensystem 15. Figur 2 zeigt einen Längsschnitt des in Figur 1 gezeigten Reiblamellensystems. Figur 3 zeigt eine Draufsicht auf eine erste Reiblamelle 20 des Reiblamellensystems 15. Figur 4 zeigt eine Draufsicht auf eine zweite Reiblamelle 25 des in Figur 1 und 2 gezeigten Reiblamellensystems 15. Figur 5 zeigt einen Querschnitt durch die in Figur 3 gezeigte erste Reiblamelle 20. Figuren 6 und 7 zeigen perspektivische Teilansichten einer in Figur 3 gezeigten Reiblamelle 20 und Figur 8 zeigt einen Querschnitt der in Figur 3 gezeigten Reiblamelle 20 entlang einer in Figur 5 gezeigten Schnittebene A-A. Nachfolgend sollen die Figuren 1 bis 7 zum erleichterten Verständnis gemeinsam erläutert werden. Dabei werden gleiche Bauteile mit gleichen Bezugszeichen benannt.

Die Reibkupplung 10 umfasst einen Nassraum. Die Reibkupplung 10 weist eine Eingangsseite 30, die in Figur beispielhaft rechtsseitig angeordnet ist, und eine Ausgangsseite 35, die in Figur 1 beispielhaft linksseitig angeordnet ist, auf. Die Eingangsseite 30 kann beispielsweise mit einem Verbrennungsmotor verbunden werden. Die Eingangsseite 30 umfasst ferner einen Außenlamellenträger 40, der eine Innenverzahnung 45 umfasst. Die Ausgangsseite 35 umfasst einen Innenlamellenträger 50, der eine Außenverzahnung 55 umfasst. Der Außenlamellenträger 40, sowie der Innenlamellenträger 50, sind nur grobschematisch dargestellt und dienen dazu, jeweils eine drehmomentschlüssige Verbindung zwischen den korrespondierenden Reiblamellen 20, 25 und der Eingangs- bzw. Ausgangsseite 30, 35 bereitzustellen.

Ferner umfasst die Reibkupplung 10 eine Kompressionseinrichtung 60, die linksseitig axial angrenzend an die zweite Reiblamelle 25 angeordnet ist. Die Kompressionseinrichtung 60 dient dazu, eine axiale Druckkraft, also parallel zu einer Längsachse 65 der Reibkupplung 10, bereitzustellen. Die Reibkupplung 10 ist dabei selbst um die Längsachse 65 drehbar angeordnet. Die Reibkupplung 10 ist als nass laufende Kupplung ausgebildet und weist eine in einem nicht dargestellten Kupplungsgehäuse einen Nassraum 65 auf, der mit Kühlflüssigkeit 70 befüllt ist. Die Kühlflüssigkeit 70 dient dazu, einen Wärmeeintrag beim Einkuppeln der Reibkupplung aus den Reiblamellen 20, 25 abzuführen, um eine Überhitzung der Reiblamellen 20, 25 zu vermeiden. Die erste Reiblamelle 20 weist eine Außenverzahnung 75 auf, die in die Innenverzahnung 45 des Außenlamellenträgers 40 eingreift. Dadurch ist die erste Reiblamelle 20 axial verschiebbar, aber drehmomentschlüssig mit der Eingangsseite verbunden. Die zweite Reiblamelle weist eine Innenverzahnung 80 auf, die in die Außenverzahnung 55 des Innenlamellenträgers 55 eingreift und die zweite Reiblamelle 25 drehmomentschlüssig, aber axial in der Außenverzahnung 55 verschiebbar, mit der Ausgangsseite 35 der Reibkupplung 10 verbindet. Die erste Reiblamelle 20 weist eine erste Trägerscheibe 85 auf. Die erste Trägerscheibe 80 fasst ein erstes Trägerscheibenteil 90 und ein zweites Trägerscheibenteil 95 auf. Der erste und der zweite Trägerscheibenteil 90, 95 sind axial angrenzend direkt nebeneinander angeordnet. An dem zweiten Trägerscheibenteil 95 ist rechtsseitig ein erster Reibbelag 100 vorgesehen.

Die zweite Reiblamelle 25 umfasst einen stirnseitig auf einer dem ersten Trägerscheibenteil 90 zugewandten Seite der Trägerscheibe 80 einen zweiten Reibbelag 105. Der zweite Reibbelag 105 ist somit zwischen dem ersten Trägerscheibenteil 90 und der zweiten Trägerscheibe 80 angeordnet. Sowohl der erste Reibbelag 100 als auch der zweite Reibbelag 105 sind form- und/oder stoffschlüssig mit der jeweiligen Trägerscheibe 75, 80 verbunden. Der erste Reibbelag 100 ist seinerseits zwischen dem zweiten Trägerscheibenteil 95 der ersten Trägerscheibe 75 und der zweiten Trägerscheibe 80 einer zweiten weiteren Reiblamelle 25 axial angeordnet. Die Reiblamellen 20, 25 bilden dabei gemeinsam ein Lamellenpaket 110 aus, das ausgebildet ist, durch die Kompressionseinrichtung 60 axial verschoben und aneinandergepresst zu werden, so dass der erste Reibbelag 100 linksseitig an der zweiten Trägerscheibe 85 anliegt. Der zweite Reibbelag 105 liegt rechtsseitig an der linksseitigen Stirnseite des ersten Trägerscheibenteils 90 an. Werden die Reiblamellen 20, 25 durch die Kompressionseinrichtung 60 aneinander gepresst, so bewirken die Reibbeläge 100, 105 zusammen mit den Trägerscheiben 80, 85 einen Reibschluss und verbinden somit die Eingangsseite 30 drehmomentschlüssig mit der Ausgangsseite 35.

Die erste Trägerscheibe 85 (vgl. Figur 3) weist eine erste Radialnut 115 auf, die radial von innen nach außen verläuft. Die erste Radialnut 115 weist einen ersten Radialnutbereich 120 und einen zweiten Radialnutbereich 125 auf. Der erste Radialnutbereich 120 ist dabei radial außenseitig zu dem zweiten Radialnutbereich 125 angeordnet. Der erste Radialnutbereich 120 und der zweite Radialnutbereich 125 weisen in Umfangsrichtung eine Breite b auf. Dabei ist die erste Radialnut 115 gestuft ausgebildet, wobei der zweite Radialnutbereich 125 schmaler als der erste Radialnutbereich 120 ausgebildet ist. Radial innenseitig und radial außenseitig mündet die erste Radialnut 115 an einer inneren bzw. äußeren Umfangsfläche 130, 135. An der äußeren Umfangsfläche 135 bildet die erste Radialnut 115 dabei eine Austrittsöffnung 140 aus. An der inneren Umfangsfläche 130 bildet die Radialnut 115 mit dem zweiten Radialnutbereich 125 eine Eintrittsöffnung 145 aus.

Die zweite Reiblamelle 25 (vgl. Fig. 4) weist radial innenseitig die Innenverzahnung 76 auf, mit der die zweite Reiblamelle 25 drehmomentschlüssig über die Außenverzahnung 55 des Innenlamellenträgers 50 verbunden ist. Ferner weist der zweite Reibbelag 105 mehrere zweite Radialnuten 150 auf, die sich radial von innen nach außen erstrecken. Die zweiten Radialnuten 150 sind jeweils beabstandet voneinander in Umfangsrichtung angeordnet. Radial außenseitig zu den zweiten Radialnuten 150 ist eine Verbindungsnut 155 vorgesehen, die ringförmig ausgebildet ist, und fluidisch die zweiten Radialnuten 150 miteinander verbindet. Radial außenseitig zu der Verbindungsnut 155 ist ein umlaufender Steg 160 vorgesehen, der Teil des Reibbelags 105 ist. Der Verbindungssteg 160 begrenzt die Verbindungsnut 155 radial außenseitig und verhindert bei angepresstem Reibbelag 105 an die erste Trägerscheibe 80 den Austritt von Kühlflüssigkeit 70 radial nach außen. Die Radialnuten 150 münden radial innenseitig an einer inneren Umfangsfläche 160 der zweiten Reiblamelle 25 und bilden dort zweite Eintrittsöffnungen 170 aus. Die zweiten Radialnuten 150 der zweiten Reiblamelle 25 sind dabei mit gleicher Breite ausgebildet. Selbstverständlich ist auch denkbar, dass die Breite über den radialen Abstand innen veränderlich ist. Auch ist denkbar, dass die Verbindungsnut 155 andersartig ausgebildet ist und beispielsweise nur teilringförmig einzelne zweite Radialnuten 150 fluidisch miteinander verbindet.

Die erste Trägerscheibe 80 der ersten Reiblamelle 20 weist mehrere Durchgangsöffnungen 175 auf. Die Durchgangsöffnungen 175 weisen einen ersten axial verlaufenden Durchgangsöffnungsabschnitt 180 und einen zweiten axial verlaufenden Durchgangsöffnungsabschnitt 185 auf. Der erste Durchgangsöffnungsabschnitt 180 mündet an einer ersten Durchgangsmündung 186 in die zweite Radialnut 150. Der zweite Durchgangsöffnungsabschnitt 185 mündet an einer zweiten Durchgangsmündung 186 in die erste Radialnut 115. Dabei ist der erste Durchgangsöffnungsabschnitt 180 im ersten Trägerscheibenteil 90 angeordnet. Der zweite Durchgangsöffnungsabschnitt 185 ist im zweiten Trägerscheibenteil 95 angeordnet.

Der erste Durchgangsöffnungsabschnitt 180 ist dabei radial außenliegend und der zweite Durchgangsöffnungsabschnitt 185 ist dabei radial innenliegend zu dem ersten Durchgangsöffnungsabschnitt 180 in der ersten Trägerscheibe 80 angeordnet. Zwischen dem ersten Durchgangsöffnungsabschnitt 180 und dem zweiten Durchgangsöffnungsabschnitt 185 ist ein dritter Durchgangsöffnungsabschnitt 190 vorgesehen, der radial den ersten Durchgangsöffnungsabschnitt 180 und den zweiten Durchgangsöffnungsabschnitt 185 fluidisch miteinander verbindet. In der Ausführungsform verlaufen der erste Durchgangsöffnungsabschnitt 180 bzw. der zweite Durchgangsöffnungsabschnitt 185 parallel zur Drehachse 65 der Reibkupplung 10. Selbstverständlich ist auch denkbar, dass der erste Durchgangsöffnungsabschnitt 180 bzw. der zweite Durchgangsöffnungsabschnitt 185 schräg zu der Längsachse 65 angeordnet ist (vgl. Fig. 8). Der dritte Durchgangsöffnungsabschnitt 190 ist dabei schräg zu einer Tangente 195 an einer äußeren Umfangsfläche 200 der ersten Trägerscheibe 80 angeordnet. Dabei ist der dritte Durchgangsöffnungsabschnitt 190 derart gegenüber der Tangente 195 geneigt, dass ein radial innenliegender Bereich des dritten Durchgangsöffnungsabschnitts 190 entgegen einer Drehrichtung 205 geneigt ist. Dabei schließen der dritte Durchgangsöffnungsabschnitt 190 und die Tangente 195 einen Neigungswinkel α ein, der einen Winkelbereich von 0 bis < 90 Grad aufweist.

In der Ausführungsform ist der dritte Durchgangsöffnungsabschnitt 190 geradlinig schräg zu der Tangente 195 ausgebildet. Selbstverständlich ist auch denkbar, dass der dritte Durchgangsöffnungsabschnitt 190 kurvenförmig ausgestaltet ist. Auch ist denkbar, dass die Durchgangsöffnung 175 anstelle der in Figur 5 gezeigten regelmäßigen, in Umfangsrichtung verteilten Anordnung unregelmäßig verteilt in Umfangsrichtung ausgebildet ist. Auch ist denkbar, dass die Durchgangsöffnung 175 unterschiedliche radiale Erstreckungen aufweist.

Die Kühlflüssigkeit 70 strömt radial innenseitig in die zweite Radialnut 150 der zweiten Reiblamelle 25 ein. Durch die zweite Radialnut 115 wird die Kühlflüssigkeit radial von innen nach außen geführt. Der Begrenzungssteg 160 verhindert, dass die Kühlflüssigkeit 70 radial nach außen hin die zweite Radialnut im angepressten Zustand des Lamellenpakets 110 verlassen kann. Dadurch lenkt der Begrenzungssteg 160 die Kühlflüssigkeit 70 von der radialen Strömungsrichtung in eine axiale Strömungsrichtung um. Die Kühlflüssigkeit 70 tritt in die Durchgangsöffnung 175 der ersten Trägerscheibe 80 der ersten Reiblamelle 20 ein. Dabei durchströmt sie zuerst den ersten Durchgangsöffnungsabschnitt 180 in axialer Richtung. Die Kühlflüssigkeit 70 wird in dem Reiblamellensystem 15 im Wesentlichen durch die antriebsseitige erste Reiblamelle 20 gefördert. Dabei weist die zweite Radialnut 150 der zweiten Reiblamelle 25 nur eine geringe Pumpwirkung auf, die abhängig von der Nutung bzw. der Ausrichtung der zweiten Radialnut 150 ist. Der erste Durchgangsöffnungsabschnitt 180 kann anstelle einer parallelen Ausrichtung zu einer Längsachse 65 schräg entgegen der Drehrichtung in Umfangsrichtung (vgl. Fig. 8) ausgerichtet sein, um so die Pumpwirkung des ersten Durchgangsöffnungsabschnitts 180 zu erhöhen. Dabei wird die Pumpwirkung verstärkt, je stärker der erste Durchgangsöffnungsabschnitt bzw. je geringer ein Winkel β ist, der zwischen einer Stirnseite 215 und einer Längsachse 220 des ersten Durchgangsöffnungsabschnitts 180 eingeschlossen wird. Ferner ist von Vorteil, wenn der erste Durchgangsöffnungsabschnitt 180 in Umfangsrichtung besonders breit ausgebildet ist, wobei eine Querschnittsfläche des ersten Durchgangsöffnungsabschnitts 180 durch eine Festigkeit des Materials von zwischen den einzelnen Durchgangsöffnungsabschnitten 180 angeordneten Stegen 225 bestimmt ist. Dadurch ist die Durchgangsöffnung 175 in Umfangsrichtung nahezu durchgängig und es wird vermieden, dass die Kühlflüssigkeit 70 auf Umfangsgeschwindigkeit beschleunigt wird und somit wird eine Förderung der Kühlflüssigkeit 70 im dritten Durchgangsöffnungsabschnitt von radial außen nach radial innen hin erleichtert. Der dritte Durchgangsöffnungsabschnitt 190 fördert die Kühlflüssigkeit 70 radial von außen nach innen hin zum zweiten Durchgangsöffnungsabschnitt 185. Dabei rotiert die erste Trägerscheibe 80 mit der Eingangsdrehzahl und somit mit einer größeren Drehzahl beim Einkuppeln als die zweite Trägerscheibe 85. Durch die geneigte Anordnung des dritten Durchgangsöffnungsabschnitts 190 entgegen der Drehrichtung 205 bildet der dritte Durchgangsöffnungsabschnitt 190 ein Pumpenelement aus, das trotz Drehung mit Eingangsdrehzahl die Kühlflüssigkeit 70 radial von außen nach innen hin fördert.

Auch der dritte Durchgangsöffnungsabschnitt 190 weist eine Pumpwirkung nach radial innen hin auf. Dies liegt darin, dass eine Fliehkraft, die auf die Kühlflüssigkeit 70 wirkt, entgegen der Flussrichtung der Kühlflüssigkeit 70 in dem dritten Durchgangsöffnungsabschnitt 190 wirkt. Jedoch wirkt aufgrund der Trägheit der Kühlflüssigkeit 70 in Verbindung mit der Anstellung bzw. der schrägen Anordnung des dritten Durchgangsöffnungsabschnitts 190 eine Pumpwirkung auf die Kühlflüssigkeit 70, die die Kühlflüssigkeit 70 radial nach innen hin fördert. Durch das Anstellen bzw. der Neigung des dritten Durchgangsöffnungsabschnitts 190 hin zur Tangente 195 gegen die Drehrichtung 205 der Trägerscheibe 80 wird eine Schaufelwirkung bereitgestellt, durch die die nach außen hin wirkenden Kräfte auf die Kühlflüssigkeit durch die Fliehkraft ausgeglichen werden bzw. überwiegt bei einem Anstellwinkel von < 60 Grad der fördernde Anteil, so dass die Kühlflüssigkeit 70 radial nach innen hin gefördert wird. Im zweiten Durchgangsöffnungsabschnitt 185 wird aufgrund der parallelen Ausrichtung des Durchgangsöffnungsabschnitts 185 zur Längsachse 65 nur eine geringe Pumpwirkung erzielt. Die Kühlflüssigkeit durchströmt dann den zweiten Durchgangsöffnungsabschnitt 185 und strömt axial in Richtung der ersten Radialnut 115 des ersten Reibbelags 100. Dabei tritt die Kühlflüssigkeit 70 über den zweiten Durchgangsöffnungsabschnitt 185 radial innenseitig in die erste Radialnut 115 ein. Dabei mündet der zweite Durchgangsöffnungsabschnitt 185 an einer zweiten Durchgangsmündung 187 in den ersten Radialnutbereich 120. Zusätzlich wird von radial innen über die erste Eintrittsöffnung 145 zusätzlich Kühlflüssigkeit 70 von radial innen in die erste Radialnut 115 des ersten Reibbelags 100 gefördert. Aufgrund der Befestigung des ersten Reibbelags 100 an der ersten Trägerscheibe 80 dreht der erste Reibbelag 100 mit Eingangsdrehzahl. Dadurch weist die erste Radialnut 115 eine besonders hohe Förderleistung von Kühlflüssigkeit 70 von radial innen nach außen hin auf. Die Kühlflüssigkeit 70 wird durch die Radialnut 115 radial nach außen hin gefördert und verlässt radial außenseitig die erste Radialnut 115 über die Austrittsöffnung 140. Die Kühlflüssigkeit 70 strömt sodann über einen weiteren Strömungsweg 210 wieder radial nach innen. Um eine Rückströmung zu erlauben, sind sowohl in dem Außenlamellenträger 40 als auch in dem Innenlamellenträger 50 weitere Öffnungen 215 vorgesehen, die einen Durchtritt der Kühlflüssigkeit 70 durch den Außenlamellenträger 40 bzw. den Innenlamellenträger 50 ermöglichen. Aufgrund der radialen von innen nach außen verlaufenden ersten Radialnuten 115 wird eine besonders hohe Pumpwirkung im ersten Reibbelag 100 der ersten Reiblamelle 20 bereitgestellt, die ebenso dazu führt, dass die Kühlflüssigkeit 70 durch die Durchgangsöffnung 175 bzw. durch die Radialnut 150 angesaugt wird. Besonders vorteilhaft ist hierbei, wenn der zweite Durchgangsöffnungsabschnitt 185 angrenzend an die Querschnittsveränderung beim Übergang des ersten Radialnutbereichs 120 zum zweiten Radialnutbereich 125 im ersten Radialnutbereich 125 angeordnet wird. Da durch die Querschnittsverengung der Radialnut 115 nicht der gesamte Nutquerschnitt zum Ansaugen von Kühlflüssigkeit 70 von radial innen über die erste Eintrittsöffnung 145 zur Verfügung steht, wird über den zweiten Durchgangsöffnungsabschnitt 185 die Kühlflüssigkeit 70 nachgesaugt. Zusätzlich entsteht durch die schnell nach außen strömende Kühlflüssigkeit in der ersten Radialnut 115 ein Unterdruck, der die Kühlflüssigkeit 70 aus dem zweiten Durchgangsöffnungsabschnitt 185 ansaugt (Venturi-Effekt).

Die oben beschriebene Ausgestaltung des Reiblamellensystems 15 hat den Vorteil, dass bei globaler Durchströmung sowohl die Vorteile von Reiblamellen 20, 25 mit einseitig aufgebrachtem Reibbelag mit den Vorteilen von Reiblamellen mit beidseitig aufgebrachtem Reibbelag vereint werden. Das Reiblamellensystem 15 kann weitere, wie oben beschriebene, Reiblamellen 20, 25 aufweisen, die abwechselnd aneinander angrenzend angeordnet sind. Dabei kann durch die schnell drehende antriebsseitige erste Reiblamelle 20 und durch die erste Radialnut 115 eine besonders hohe Pumpwirkung erreicht werden, die ausreicht, die Kühlflüssigkeit 70 auch aus der langsam drehenden bzw. abtriebsseitigen zweiten Reiblamelle 25 zu fördern.

Dabei wird eine kontinuierliche Förderung von Kühlflüssigkeit durch die Reiblamellen 20, 25 auch bei verdrehten Reiblamellen 20, 25, wenn also die ersten und weiteren Radialnuten 115, 150 nicht überlappend angeordnet sind, dadurch erreicht, dass der erste Durchgangsöffnungsabschnitt 160 radial auf gleicher Höhe mit der Verbindungsnut 155 angeordnet ist. Dadurch wird ein Eintritt der Kühlflüssigkeit 70 in die Durchgangsöffnung 175 unabhängig von der Ausrichtung des zweiten Reibbelags 105 bzw. der zweiten Radialnuten 150 zu dem ersten Durchgangsöffnungsabschnitt 180 gewährleistet. Ferner wird durch den Begrenzungssteg 160 zuverlässig eine Umlenkung der Kühlflüssigkeit 70 in den ersten Durchgangsöffnungsabschnitt 160 gewährleistet und der Austritt von Kühlflüssigkeit 70 radial nach außen hin aus der zweiten Radialnut 150 verhindert.

Besonders einfach kann die erste Trägerscheibe 80 dadurch hergestellt werden, dass der erste Durchgangsöffnungsabschnitt 180 als Bohrung ausgebildet ist, deren Längsachse 180 parallel oder schräg zur Längsachse 65 der Reibkupplung 10 verläuft. Der dritte Durchgangsöffnungsabschnitt 190 kann beispielsweise mittels eines Stanz- oder Fräsverfahrens in das erste Trägerscheibenteil 90 eingebracht werden. Dabei ist der dritte Durchgangsöffnungsabschnitt 190 als offene Nut ausgebildet. Der zweite Durchgangsöffnungsabschnitt 185 ist in dem zweiten Trägerscheibenteil 95 ebenso als Bohrung ausgebildet, die mittels eines Spanoder eines Stanzverfahrens in das zweite Trägerscheibenteil 95 eingebracht wird. Das zweite Trägerscheibenteil 95 verschließt stirnseitig auf einer dem ersten Trägerscheibenteil 90 zugewandten Seite die offene Nut des dritten Durchgangsöffnungsabschnitts 190. Dadurch kann die erste Trägerscheibe 80 besonders kostengünstig und einfach hergestellt werden. Durch das Zusammenfügen der beiden Trägerscheibenteile 90, 95 wird dann der gewünschte Kanal der Durchgangsöffnung 175 bereitgestellt. Die beiden Trägerscheibenteile 90, 95 können beispielsweise flächig stoff- oder formschlüssig insbesondere verklebt, verlötet oder verschweißt werden, um eine Verbindung zwischen den beiden Trägerscheibenteilen 90, 95 zu gewährleisten und somit die Ausrichtung des ersten Durchgangsöffnungsabschnitts 160 zu dem zweiten Durchgangsöffnungsabschnitt 185 zu gewährleisten. Selbstverständlich ist auch denkbar, dass auf die stoff- und/oder formschlüssige Verbindung verzichtet wird und einzig und allein durch das Zusammenpressen des Reiblamellenpakets 110 durch die Kompressionseinrichtung 60 die Durchgangsöffnung 175 gedichtet wird und so der Kühlflüssigkeitsstrom der Kühlflüssigkeit 70 durch die erste Trägerscheibe 80 gewährleistet wird.

In der Ausführungsform ist die erste Trägerscheibe 80 der ersten Reiblamelle 20 mit der Eingangsseite 30 radial außenseitig über die Außenverzahnung 75 mit dem Außenlamellenträger 40 verbunden. Selbstverständlich ist auch denkbar, dass die erste Reiblamelle 20 über einen Innenlamellenträger und die zweite Reiblamelle 25 über einen Außenlamellenträger jeweils mit der korrespondierenden Eingangsseite 30 bzw. Ausgangsseite 35 drehmomentschlüssig verbunden ist.

Dadurch kann eine besonders hohe Pumpwirkung innerhalb des Reiblamellensystems 15 bereitgestellt werden, wobei gleichzeitig sowohl die Reibbeläge 100, 105 als auch die erste Trägerscheibe 80 durch die Kühlflüssigkeit 70 intern gekühlt wird. Dadurch kann ein besonders hoher Wärmeeintrag, der beispielsweise beim Einkoppeln der Reibkupplung 10 anfällt, mittels der Kühlflüssigkeit 70 aus dem Reiblamellensystem 15 abgeführt werden.

### Bezugszeichenliste

- 10: Reibkupplung
- 15: Reiblamellensystem
- 20: Erste Reiblamelle
- 25: Zweite Reiblamelle
- 30: Eingangsseite
- 35: Ausgangsseite
- 40: Außenlamellenträger
- 45: Innenverzahnung
- 50: Innenlamellenträger
- 55: Außenverzahnung des Innenlamellenträgers
- 60: Kompressionseinrichtung
- 65: Längsachse
- 69: Nassraum
- 70: Kühlflüssigkeit
- 75: Außenverzahnung der ersten Reiblamelle
- 76: Innenverzahnung der zweiten Reiblamelle
- 80: Erste Trägerscheibe
- 85: Zweite Trägerscheibe
- 90: Erstes Trägerscheibenteil
- 95: Zweites Trägerscheibenteil
- 100: Erster Reibbelag
- 105: Zweiter Reibbelag
- 110: Lamellenpaket
- 115: Erste Radialnut
- 120: Erster Radialnutbereich
- 125: Zweiter Radialnutbereich
- 130: Innere Umfangsfläche
- 135: Äußere Umfangsfläche
- 140: Austrittsöffnung
- 145: Erste Eintrittsöffnung
- 150: Zweite Radialnut
- 155: Verbindungsnut
- 160: Begrenzungssteg
- 165: Innere Umfangsfläche der zweiten Reiblamelle
- 170: Zweite Eintrittsöffnung
- 175: Durchgangsöffnung
- 180: Erster Durchgangsöffnungsabschnitt
- 185: Zweiter Durchgangsöffnungsabschnitt
- 190: Dritter Durchgangsöffnungsabschnitt
- 195: Tangente
- 200: Äußere Umfangsfläche der Trägerscheibe
- 205: Drehrichtung
- 210: Öffnung
- 215: Stirnseite
- 220: Längsachse des ersten Durchgangsöffnungsabschnitt
- 225: Steg

## Patentansprüche

1. Reiblamellensystem (15) für eine nasse Reibkupplung (10) mit einer ersten Reiblamelle (20) und einer zweiten Reiblamelle (25),
- wobei die erste Reiblamelle (20) mit einer Eingangsseite (30) einer Reibkupplung (10) und die zweite Reiblamelle (25) mit einer Ausgangsseite (35) der Reibkupplung (10) koppelbar ist,
- wobei jede Reiblamelle (20, 25) jeweils eine Trägerscheibe (80, 85) und einen stirnseitig an der Trägerscheibe (80, 85) angeordneten Reibbelag (100, 105) aufweist,
- wobei die beiden Reiblamellen (20, 25) derart axial angrenzend zueinander angeordnet sind, dass axial gegenüberliegend dem Reibbelag (105) der zweiten Reiblamelle (25) die Trägerscheibe (80) der ersten Reiblamelle (20) angeordnet ist,
- wobei die Trägerscheiben (80, 85) und der Reibbelag (100, 105) ausgebildet sind aneinander gepresst zu werden, um einen Reibschluss zwischen dem Reibbelag (100) der ersten Reiblamelle (20) und der Trägerscheibe der zweiten Reiblamelle (25) bereitzustellen und die Eingangsseite (30) mit der Ausgangsseite (35) drehmomentschlüssig zu verbinden,
- wobei in dem Reibbelag (100, 105) der ersten und der zweiten Reiblamelle (20, 25) jeweils wenigstens eine Radialnut (115, 150) vorgesehen ist, die zumindest teilweise radial von innen nach außen geführt und ausgebildet ist, eine Kühlflüssigkeit der Reibkupplung (10) zur Kühlung der Reiblamellen (20, 25) zu führen, wobei wenigstens eine zumindest teilweise in radialer Richtung von außen nach innen verlaufende Durchgangsöffnung (175) in der Trägerscheibe (80, 85) der ersten und/oder zweiten Reiblamelle (20, 25) vorgesehen ist,
- wobei die Durchgangsöffnung (175) die Radialnut (115) der ersten Reiblamelle (20) mit der Radialnut (150) der zweiten Reiblamelle (25) fluidisch verbindet, so dass die Kühlflüssigkeit von der Radialnut (150) der zweiten Reiblamelle (25) in die Radialnut (115) der ersten Reiblamelle (20) strömen kann, **dadurch gekennzeichnet, dass** in dem Reibbelag (105) der zweiten Reiblamelle (25) eine weitere Radialnut (150) und eine Verbindungsnut (155) vorgesehen sind, wobei die weitere Radialnut (150) zumindest teilweise radial von innen nach außen verlaufend und umfangsseitig beabstandet zu der Radialnut (150) angeordnet ist, wobei die Verbindungsnut (155) zumindest teilweise in Umfangsrichtung umlaufend ausgebildet ist und die Radialnut (150) mit der weiteren Radialnut (150) fluidisch verbindet.

2. Reiblamellensystem (15) nach Anspruch 1, **dadurch gekennzeichnet, dass** ein in Umfangsrichtung zumindest teilweise umlaufender Begrenzungssteg (160) an dem Reibbelag (105) der zweiten Reiblamelle (25) vorgesehen ist, wobei die Verbindungsnut (155) radial außenseitig zu der Radialnut (150) und/oder der weiteren Radialnut (150) angeordnet ist, wobei der Begrenzungssteg die Verbindungsnut (155) und/oder wenigstens eine der beiden Radialnuten (150) radial außenseitig begrenzt.

3. Reiblamellensystem (15) nach einem der Ansprüche 1 bis 2, **dadurch gekennzeichnet, dass** die Radialnut (115) der ersten Reiblamelle (20) einen ersten Radialnutbereich (120) und einen radial innenliegend zum ersten Radialnutbereich (120) angeordneten zweiten Radialnutbereich (125) umfasst, wobei die beiden Radialnutbereiche (120, 125) eine unterschiedliche Breite in Umfangsrichtung aufweisen.

4. Reiblamellensystem (15) nach Anspruch 3, **dadurch gekennzeichnet, dass** der zweite Radialnutbereich (125) in Umfangsrichtung schmaler ausgebildet ist als der erste Radialnutbereich (120).

5. Reiblamellensystem (15) nach einem der Ansprüche 1 bis 4, **dadurch gekennzeichnet, dass** die Radialnut (115, 150) des ersten und/oder der zweiten Reiblamelle (25) radial innenseitig eine Eintrittsöffnung (140, 175) aufweist.

6. Reiblamellensystem (15) nach einem der Ansprüche 1 bis 5, **dadurch gekennzeichnet, dass** die Trägerscheibe (80, 85) der ersten und/oder zweiten Reiblamelle (20, 25) ein erstes Trägerscheibenteil (90) und ein zweites Trägerscheibenteil (95) umfasst, wobei das erste Trägerscheibenteil (90) und das zweite Trägerscheibenteil (95) stirnseitig direkt aneinanderliegend angeordnet sind.

7. Reiblamellensystem (15) nach Anspruch 6, **dadurch gekennzeichnet, dass** in dem ersten Trägerscheibenteil (90) ein erster zumindest teilweise in axialer Richtung verlaufender Durchgangsöffnungsabschnitt (180) der Durchgangsöffnung (175) und im zweiten Trägerscheibenteil (95) ein zweiter zumindest teilweise in axialer Richtung verlaufender Durchgangsöffnungsabschnitt (185) der Durchgangsöffnung (175) angeordnet sind, wobei zwischen dem ersten und dem zweiten Durchgangsöffnungsabschnitt (180, 185) ein dritter zumindest teilweise radial verlaufender Durchgangsöffnungsabschnitt (190) der Durchgangsöffnung (175) angeordnet ist.

8. Reiblamellensystem (15) nach einem der Ansprüche 1 bis 7, **dadurch gekennzeichnet, dass** zumindest ein Teilabschnitt (190) der Durchgangsöffnung (175) schräg zu einer Tangentiale (195) der Trägerscheibe (80, 85) angeordnet ist, wobei vorzugsweise die Durchgangsöffnung (175) radial innenseitig in der Radialnut (115) der ersten Reiblamelle (20) an einer ersten Durchgangsmündung (187) und radial außenseitig in der Radialnut (150) der zweiten Reiblamelle (25) an einer zweiten Durchgangsmündung (186) mündet und die zweite Durchgangsmündung (186) in Drehrichtung der zweiten Reiblamelle (25) vor der ersten Durchgangsmündung (187) angeordnet ist.

9. Reibkupplung (10) umfassend:
- eine Eingangsseite (30) und eine Ausgangsseite (35), die drehbar um eine Drehachse (65) angeordnet sind, sowie
- einen Nassraum (69), der mit einer Kühlflüssigkeit (70) befüllbar ist, wobei in dem Nassraum (69)
- ein Reiblamellensystem (15) mit einer ersten und einer zweiten Reiblamelle (25) angeordnet ist, und eine Kompressionseinrichtung (60) angeordnet ist,
- wobei die erste Reiblamelle (20) drehmomentschlüssig mit der Eingangsseite (30) in Eingriff steht,
- wobei die zweite Reiblamelle (25) drehmomentschlüssig mit der Ausgangsseite (35) in Eingriff steht, und
- wobei die Kompressionseinrichtung (60) ausgebildet ist, eine axiale Kompression der Reiblamellen (20, 25) zur Erzeugung eines Drehmomentschlusses zwischen der Eingangsseite (30) und der Ausgangsseite (35) bereitzustellen,
**dadurch gekennzeichnet, dass**
- das Reiblamellensystem (15) nach einem der Ansprüche 1 bis 8 ausgebildet ist.

## Claims

1. Friction disc system (15) for a wet friction clutch (10) having a first friction disc (20) and a second friction disc (25),
- it being possible for the first friction disc (20) to be coupled to an input side (30) of a friction clutch (10) and for the second friction disc (25) to be coupled to an output side (35) of the friction clutch (10),
- each friction disc (20, 25) in each case having a carrier disc (80, 85) and a friction lining (100, 105) which is arranged on the front side of the carrier disc (80, 85),
- the two friction discs (20, 25) being arranged so as to adjoin one another axially in such a way that the carrier disc (80) of the first friction disc (20) is arranged so as to lie axially opposite the friction lining (105) of the second friction disc (25),
- the carrier discs (80, 85) and the friction lining (100, 105) being configured to be pressed onto one another, in order to provide a frictionally locking connection between the friction lining (100) of the first friction disc (20) and the carrier disc of the second friction disc (25) and to connect the input side (30) to the output side (35) in a torque-locking manner,
- in each case at least one radial groove (115, 150) being provided in the friction lining (100, 105) of the first and the second friction disc (20, 25), which radial groove (115, 150) is guided at least partially radially from the inside to the outside and is configured to conduct a cooling liquid of the friction clutch (10) for cooling the friction discs (20, 25), at least one through opening (175) which runs at least partially in the radial direction from the outside to the inside being provided in the carrier disc (80, 85) of the first and/or second friction disc (20, 25),
- the through opening (175) fluidically connecting the radial groove (115) of the first friction disc (20) to the radial groove (150) of the second friction disc (25), with the result that the cooling liquid can flow from the radial groove (150) of the second friction disc (25) into the radial groove (115) of the first friction disc (20), **characterized in that**
a further radial groove (150) and a connecting groove (155) are provided in the friction lining (105) of the second friction disc (25), the further radial groove (150) being arranged so as to run at least partially radially from the inside to the outside and so as to be spaced apart on the circumferential side from the radial groove (150), the connecting groove (155) being configured so as to run around at least partially in the circumferential direction and fluidically connecting the radial groove (150) to the further radial groove (150).

2. Friction disc system (15) according to Claim 1, **characterized in that** a bounding web (160) which runs around at least partially in the circumferential direction is provided on the friction lining (105) of the second friction disc (25), the connecting groove (155) being arranged radially on the outer side with respect to the radial groove (150) and/or the further radial groove (150), the bounding web delimiting the connecting groove (155) and/or at least one of the two radial grooves (150) radially on the outer side.

3. Friction disc system (15) according to either of Claims 1 and 2, **characterized in that** the radial groove (115) of the first friction disc (20) comprises a first radial groove region (120) and a second radial groove region (125) which is arranged so as to lie radially on the inside with respect to the first radial groove region (120), the two radial groove regions (120, 125) having a different width in the circumferential direction.

4. Friction disc system (15) according to Claim 3, **characterized in that** the second radial groove region (125) is of narrower configuration in the circumferential direction than the first radial groove region (120).

5. Friction disc system (15) according to one of Claims 1 to 4, **characterized in that** the radial groove (115, 150) of the first and/or the second friction disc (25) has an inlet opening (140, 175) radially on the inner side.

6. Friction disc system (15) according to one of Claims 1 to 5, **characterized in that** the carrier disc (80, 85) of the first and/or second friction disc (20, 25) comprises a first carrier disc part (90) and a second carrier disc part (95), the first carrier disc part (90) and the second carrier disc part (95) being arranged so as to lie directly on one another on the front side.

7. Friction disc system (15) according to Claim 6, **characterized in that** a first through opening section (180), running at least partially in the axial direction, of the through opening (175) is arranged in the first carrier disc part (90), and a second through opening section (185), running at least partially in the axial direction, of the through opening (175) is arranged in the second carrier disc part (95), a third at least partially radially running through opening section (190) of the through opening (175) being arranged between the first and the second through opening section (180, 185).

8. Friction disc system (15) according to one of Claims 1 to 7, **characterized in that** at least one part section (190) of the through opening (175) is arranged obliquely with respect to a tangential (195) of the carrier disc (80, 85), the through opening (175) preferably opening radially on the inner side in the radial groove (115) of the first friction disc (20) at a first passage opening (187) and preferably opening radially on the outer side in the radial groove (150) of the second friction disc (25) at a second passage opening (186), and the second passage opening (186) being arranged in front of the first passage opening (187) in the rotational direction of the second friction disc (25).

9. Friction clutch (10) comprising:
- an input side (30) and an output side (35) which are arranged such that they can be rotated about a rotational axis (65), and
- a wet space (69) which can be filled with a cooling liquid (70),
- a friction disc system (15) with a first and a second friction disc (25), and a compression device (60) being arranged in the wet space (69),
- the first friction disc (20) being in engagement with the input side (30) in a torque-locking manner,
- the second friction disc (25) being in engagement with the output side (35) in a torque-locking manner, and
- the compression device (60) being configured to provide an axial compression of the friction discs (20, 25) in order to produce a torque-transmitting connection between the input side (30) and the output side (35),
**characterized in that**
- the friction disc system (15) is configured according to one of Claims 1 to 8.

## Revendications

1. Système de lamelles à friction (15) pour un embrayage à friction humide (10) comprenant une première lamelle à friction (20) et une deuxième lamelle à friction (25),
- la première lamelle à friction (20) pouvant être accouplée à un côté d'entrée (30) d'un embrayage à friction (10) et la deuxième lamelle à friction (25) pouvant être accouplée à un côté de sortie (35) de l'embrayage à friction (10),
- chaque lamelle à friction (20, 25) présentant à chaque fois un disque de support (80, 85) et une garniture de friction (100, 105) disposée du côté frontal au niveau du disque de support (80, 85),
- les deux lamelles à friction (20, 25) étant disposées en position adjacente axialement l'une à l'autre de telle sorte que le disque de support (80) de la première lamelle à friction (20) soit disposé axialement en regard de la garniture de friction (105) de la deuxième lamelle à friction (25),
- les disques de support (80, 85) et la garniture de friction (100, 105) étant réalisés de manière à être pressés les uns contre les autres afin de réaliser un engagement par friction entre la garniture de friction (100) de la première lamelle à friction (20) et le disque de support de la deuxième lamelle à friction (25) et de raccorder par engagement par couple le côté d'entrée (30) avec le côté de sortie (35),
- au moins une rainure radiale (115, 150) étant à chaque fois prévue dans la garniture de friction (100, 105) de la première et de la deuxième lamelle à friction (20, 25), laquelle est guidée radialement de l'intérieur vers l'extérieur au moins en partie et est réalisée de manière à guider un liquide de refroidissement de l'embrayage à friction (10) pour refroidir les lamelles à friction (20, 25), au moins une ouverture de passage (175) s'étendant au moins en partie dans la direction radiale de l'extérieur vers l'intérieur étant prévue dans le disque de support (80, 85) de la première et/ou de la deuxième lamelle à friction (20, 25),
- l'ouverture de passage (175) reliant fluidiquement la rainure radiale (115) de la première lamelle à friction (20) à la rainure radiale (150) de la deuxième lamelle à friction (25) de telle sorte que le liquide de refroidissement puisse s'écouler de la rainure radiale (150) de la deuxième lamelle à friction (25) dans la rainure radiale (115) dé la première lamelle à friction (20),
**caractérisé en ce**
**qu'**une rainure radiale supplémentaire (150) et une rainure de liaison (155) sont prévues dans la garniture de friction (105) de la deuxième lamelle à friction (25), la rainure radiale supplémentaire (150) étant disposée de manière à s'étendre au moins en partie radialement depuis l'intérieur vers l'extérieur et à distance, du côté périphérique, de la rainure radiale (150), la rainure de liaison (155) étant réalisée au moins en partie de manière à s'étendre dans la direction périphérique, et reliant fluidiquement la rainure radiale (150) à la rainure radiale supplémentaire (150).

2. Système de lamelles à friction (15) selon la revendication 1, **caractérisé en ce qu'**une nervure de limitation (160) au moins en partie périphérique dans la direction périphérique est prévue sur la garniture de friction (105) de la deuxième lamelle à friction (25), la rainure de liaison (155) étant disposée radialement du côté extérieur à la rainure radiale (150) et/ou à la rainure radiale supplémentaire (150), la nervure de limitation délimitant radialement du côté extérieur la rainure de liaison (155) et/ou au moins l'une des deux rainures radiales (150).

3. Système de lamelles à friction (15) selon l'une quelconque des revendications 1 à 2, **caractérisé en ce que** la rainure radiale (115) de la première lamelle à friction (20) présente une première région de rainure radiale (120) et une deuxième région de rainure radiale (125) disposée radialement à l'intérieur par rapport à la première région de rainure radiale (120), les deux régions de rainure radiale (120, 125) présentant une largeur différente dans la direction périphérique.

4. Système de lamelles à friction (15) selon la revendication 3, **caractérisé en ce que** la deuxième région de rainure radiale (125) est plus étroite dans la direction périphérique que la première région de rainure radiale (120).

5. Système de lamelles à friction (15) selon l'une quelconque des revendications 1 à 4, **caractérisé en ce que** la rainure radiale (115, 150) de la première et/ou de la deuxième lamelle à friction (25) présente une ouverture d'entrée (140, 175) radialement du côté intérieur.

6. Système de lamelles à friction (15) selon l'une quelconque des revendications 1 à 5, **caractérisé en ce que** le disque de support (80, 85) de la première et/ou de la deuxième lamelle à friction (20, 25) comprend une première partie de disque de support (90) et une deuxième partie de disque de support (95), la première partie de disque de support (90) et la deuxième partie de disque de support (95) étant disposées directement l'une contre l'autre par leurs côtés frontaux.

7. Système de lamelles à friction (15) selon la revendication 6, **caractérisé en ce que** dans la première partie de disque de support (90) est disposée une première portion d'ouverture de passage (180) de l'ouverture de passage (175), s'étendant au moins en partie dans la direction axiale et dans la deuxième partie de disque de support (95), est disposée une deuxième portion d'ouverture de passage (185) de l'ouverture de passage (175), s'étendant au moins en partie dans la direction axiale, une troisième portion d'ouverture de passage (190) de l'ouverture de passage (175), s'étendant au moins en partie radialement, étant disposée entre la première et la deuxième portion d'ouverture de passage (180, 185).

8. Système de lamelles à friction (15) selon l'une quelconque des revendications 1 à 7, **caractérisé en ce qu'**au moins une portion partielle (190) de l'ouverture de passage (175) est disposée obliquement par rapport à une tangente (195) du disque de support (80, 85), l'ouverture de passage (175) débouchant de préférence radialement du côté intérieur dans la rainure radiale (115) de la première lamelle à friction (20) au niveau d'une première embouchure de passage (187) et radialement du côté extérieur dans la rainure radiale (150) de la deuxième lamelle à friction (25) au niveau d'une deuxième embouchure de passage (186) et la deuxième embouchure de passage (186) étant disposée dans le sens de rotation de la deuxième lamelle à friction (25) avant la première embouchure de passage (187).

9. Embrayage à friction (10), comprenant :
- un côté d'entrée (30) et un côté de sortie (35) qui sont disposés de manière à pouvoir tourner autour d'un axe de rotation (65), ainsi
- qu'un espace humide (69) qui peut être rempli avec un liquide de refroidissement (70), dans l'espace humide (69)
- étant disposé un système de lamelles à friction (15) avec une première et une deuxième lamelle à friction (25), et étant disposé un dispositif de compression (60),
- la première lamelle à friction (20) étant en prise par engagement par couple avec le côté d'entrée (30),
- la deuxième lamelle à friction (25) étant en prise par engagement par couple avec le côté de sortie (35), et
- le dispositif de compression (60) étant réalisé de manière à fournir une compression axiale des lamelles à friction (20, 25) pour générer un engagement par couple entre le côté d'entrée (30) et le côté de sortie (35),
**caractérisé en ce que**
- le système de lamelles à friction (15) est réalisé selon l'une quelconque des revendications 1 à 8.
